# EUROPÄISCHE PATENTSCHRIFT

(11) **EP 0 895 566 B1**
(45) Veröffentlichungstag und Bekanntmachung des Hinweises auf die Patenterteilung: **12.01.2000**
(21) Anmeldenummer: 96914100.1
(22) Anmeldetag: 22.04.1996
(51) Int. Cl.: F16H 3/60, F16H 37/02, F16H 57/08

(54) **PLANETENGETRIEBE UND KUPPLUNGS-/BREMSANORDNUNG**
PLANETARY GEAR AND CLUTCH-BRAKE ARRANGEMENT
TRAIN PLANETAIRE ET ENSEMBLE EMBRAYAGE-FREIN

(43) Veröffentlichungstag der Anmeldung: 10.02.1999
(73) Patentinhaber: ZF FRIEDRICHSHAFEN Aktiengesellschaft, 88038 Friedrichshafen (DE)
(72) Erfinder: ILLERHAUS, Dietmar, D-88131 Lindau (DE)
(74) Vertreter: Zietlow, Karl-Peter
(86) Internationale Anmeldenummer: EP9601675
(87) Internationale Veröffentlichungsnummer: WO9740290

(56) Entgegenhaltungen:
- EP-A- 0 692 659
- FR-A- 2 259 291
- GB-A- 2 093 133
- GB-A- 2 102 515
- US-A- 3 131 582
- US-A- 3 359 833
- US-A- 3 669 232

## Beschreibung

Die Erfindung betrifft ein Planetengetriebe und eine Kupplungs-/Bremsanordnung, vorzugsweise für ein stufenloses Automatgetriebe, nach dem Oberbegriff von Anspruch 1 bzw. 3.

Stufenlose Automatgetriebe, nachfolgend CVT genannt (Continuously Variable Transmission), bestehen aus folgenden Baugruppen: Anfahreinheit, Vorwärts-/Rückwärtsfahreinheit, Variator, Zwischenwelle und Differential. Üblicherweise werden derartige CVT von einer Brennkraftmaschine über eine Antriebswelle, zum Beispiel Kurbelwelle, angetrieben. Als Anfahreinheit dient entweder eine Anfahrkupplung oder ein hydrodynamischer Wandler. Die Vorwärts-/Rückwärtsfahreinheit dient der Drehrichtungsumkehr der Antriebswelle für die Rückwärtsfahrt. Die Vorwärts-/Rückwärtsfahreinheit ist meist als ein Planetenwendegetriebe ausgeführt. Dieses besteht aus mindestens einem Sonnenrad, mehreren Planeten, einem Hohlrad, einer Bremse und einer Kupplung der Lamellenbauart. Der Variator besteht aus zwei Kegelscheibenpaaren und einem Umschlingungsorgan. Jedes Kegelscheibenpaar wiederum besteht aus einer in axialer Richtung feststehenden ersten Kegelscheibe und einer in axialer Richtung verschiebbaren zweiten Kegelscheibe. Zwischen diesen Kegelscheibenpaaren läuft das Umschlingungsorgan, zum Beispiel ein Schubgliederband. Über die Verstellung der zweiten Kegelscheibe ändert sich der Laufradius des Umschlingungsorgans und somit die Übersetzung des CVT.

Aus der Automobiltechnischen Zeitschrift 96 (1994) 6, Seite 380, Bild 3, ist ein CVT mit einer Vorwärts-/Rückwärtsfahreinheit bekannt. Hierbei treibt eine vom Pumpenrad des hydrodynamischen Wandlers angetriebene erste Welle die über einen gemeinsamen ersten Planetensteg verbundenen Planetenräder an. Jedes Planetenrad ist drehbar auf einem Bolzen gelagert. Die Planetenräder kämmen zum einen mit einem Sonnenrad, welches sich auf einer zweiten Welle befindet und zum anderen mit einem Hohlrad. Das Hohlrad kann über eine Bremse der Lamellenbauart gegen eine ortsfeste Wand festgesetzt werden, zum Beispiel dem Getriebegehäuse. Der zweite Planetensteg ist über eine Kupplung der Lamellenbauart mit der ersten Kegelscheibe verbunden. Bei geschlossener Kupplung läuft das Planetenwendegetriebe als Ganzes mit der Übersetzung 1 und der gleichen Drehrichtung wie die erste Welle um. Bei geschlossener Bremse erfolgt eine Drehrichtungsumkehr für die Rückwärtsfahrt.
Üblicherweise sind die Zahnräder des Planetenwendegetriebes schrägverzahnt. Durch die Schrägverzahnung Planet/Hohlrad treten axiale Kräfte am Hohlrad auf. Gemäß dem erwähnten Stand der Technik stützt sich das Hohlrad in axialer Richtung entweder am zweiten Planetensteg, der mit der Kupplung verbunden ist, oder an der ortsfesten Wand ab.

In der GB-A-2 102 515 ist entsprechend den Merkmalen im Oberbegriff von Anspruch 1 ein Planetenwendegetriebe beschrieben, bei dem eine in vertikaler Richtung angeordnete Anlaufscheibe einstückig mit dem Hohlrad verbunden ist. Der innere Radius der Anlaufscheibe entspricht hierbei etwa dem Abstand Mittelachse der ersten Welle zur Mittelachse der Bolzen. Die Anlaufscheibe stützt sich in axialer Richtung entweder an einer ortsfesten Wand oder am Planetensteg des Wendegetriebes ab.

Als kompakte Bauausführung eines Planetenwendegetriebes beschreibt die US-A-3,699,232 entsprechend den Merkmalen im Oberbegriff von Anspruch 3 eine Anordnung, bei der das Hohlrad gleichzeitig als Innenlamellenträger einer Kupplung ausgebildet ist. Der Außenlamellenträger und die Endlamelle der Kupplung sind hierbei einstückig ausgeführt.

Die Erfindung hat zur Aufgabe, ein Planetenwendegetriebe, dessen Hohlrad mit einem Innenlamellenträger verbunden ist, weiterzuentwickeln.

Die erste erfindungsgemäße Lösung der Aufgabe besteht darin, daß sich eine mit einem Hohlrad einstückig ausgeführte Anlaufscheibe, über welche die Axialkraft des Hohlrades entweder an einer ortsfesten Wand oder an einem Planetensteg abgestützt wird, zusätzlich in radialer Richtung über eine Fläche am inneren Durchmesser der Anlaufscheibe und als Gegenstück an einer Fläche der ortsfesten Wand bzw. einer Welle abstützt. Gegenüber dem Stand der Technik, bei dem das Hohlrad ausschließlich über die Planeten gelagert ist, wird hierdurch der Vorteil erzielt, daß das Hohlrad zusätzlich in radialer Richtung fixiert ist.

Eine zweite erfindungsgemäße Lösung der Aufgabe geht von einer Anordnung eines Planetengetriebes aus, bei dem das Hohlrad oder der Bolzen, auf den die Planetenräder jeweils drehbar gelagert sind, mit dem Innenlamellenträger einer Kupplung oder Bremse der Lamellenbauart drehfest verbunden ist. Die Lamellen der Kupplung oder Bremse werden hierbei von einem Kolben der Betätigung gegen eine Endlamelle gedrückt werden. Der Außenlamellenträger der Kupplung ist hierbei einstückig mit der Endlamelle ausgeführt.

Erfindungsgemäß wird vorgeschlagen, daß die Endlamelle radial in Richtung der ersten Welle einen Bund aufweist. Dieser Bund hat hierbei einen kürzeren Abstand zur ersten Welle als die Mittelachse des Innenlamellenträgers zur Mittelachse erste Welle. Hierdurch wird der Vorteil erzielt, daß der Innenlamellenträger durch den Bund gegen Herausfallen bei der Montage gesichert ist.

In der Zeichnung ist ein Ausführungsbeispiel dargestellt.
Es zeigen:
- Fig. 1: ein Systemschaubild eines CVT und
- Fig. 2: eine Vorwärts-/Rückwärtsfahreinheit.

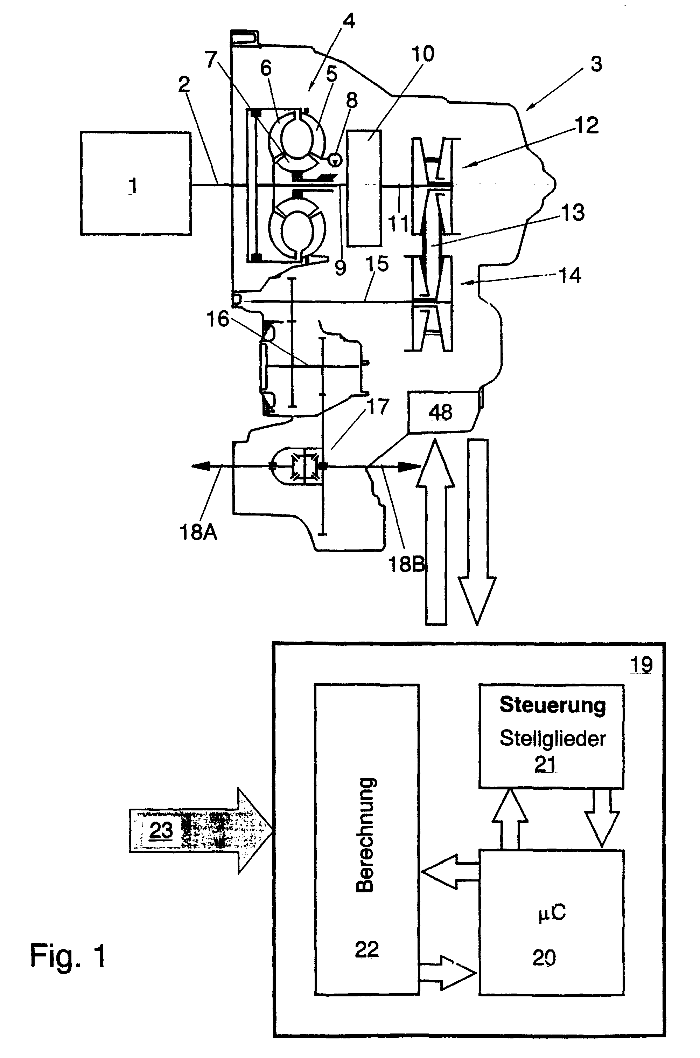

Fig. 1 zeigt ein Systemschaubild, bestehend aus einer Antriebseinheit 1, zum Beispiel Brennkraftmaschine, einem CVT 3 und einem elektronischen Steuergerät 19.
Das CVT 3 wird von der Antriebseinheit 1 über eine Antriebswelle 2 angetrieben. Die Antriebswelle 2 treibt eine Anfahreinheit an. In Fig. 1 ist als Anfahreinheit ein hydrodynamischer Wandler 4 dargestellt. Der hydrodynamische Wandler 4 besteht bekanntermaßen aus einem Pumpenrad 5, Turbinenrad 6 und Leitrad 7. Parallel zum hydrodynamischen Wandler ist eine Wandlerüberbrückungskupplung ohne Bezugszeichen dargestellt. Mit dem Pumpenrad 5 des hydrodynamischen Wandlers 4 ist eine Pumpe 8 verbunden. Die Pumpe 8 fördert das Hydraulikmedium aus dem Schmiermittelsumpf zu den Stellgliedern des CVT 3. Das Turbinenrad 6 bzw. die Wandlerüberbrückungskupplung treiben eine erste Welle 9 an. Diese Welle 9 wiederum treibt eine Vorwärts-/Rückwärtsfahreinheit 10 an. Ausgangsgröße der Vorwärts-/Rückwärtsfahreinheit ist eine zweite Welle 11. Die zweite Welle 11 ist mit dem Variator verbunden. Der Variator besteht aus einem ersten Kegelscheibenpaar 12, einem zweiten Kegelscheibenpaar 14 und einem Umschlingungsorgan 13. Das Umschlingungsorgan 13 läuft zwischen den beiden Kegelscheibenpaaren 12 und 14. Bekanntermaßen besteht jedes Kegelscheibenpaar aus einer in axialer Richtung feststehenden ersten Kegelscheibe und einer in axialer Richtung verschiebbaren zweiten Kegelscheibe. Die Übersetzung des Getriebes wird verändert, indem die Position der verschiebbaren zweiten Kegelscheibe geändert wird. Dadurch ändert sich bekanntermaßen der Laufradius des Umschlingungsorgans 13 und somit die Übersetzung. Der Variator ist mit einer Abtriebswelle 15 verbunden.
Eine Zwischenwelle 16 ist mit der Abtriebswelle 15 über ein Zahnradpaar verbunden. Die Zwischenwelle 16 dient der Drehrichtungsumkehr und einer Drehmoment- und Drehzahlanpassung. Die Zwischenwelle 16 ist über ein Zahnradpaar mit dem Differential 17 verbunden. Ausgangsgröße des Differentials 17 sind die beiden Achshalbwellen 18A und 18B, die auf die Antriebsräder des Fahrzeugs führen.
Das elektronische Steuergerät 19 steuert über nicht dargestellte elektromagnetische Stellglieder das CVT 3. Vom elektronischen Steuergerät 19 sind als Funktionsblöcke dargestellt der Micro-Controller 20, ein Funktionsblock Berechnung 22 und ein Funktionsblock Steuerung Stellglieder 21. Am elektronischen Steuergerät 19 sind Eingangsgrößen 23 angeschlossen. Eingangsgrößen 23 sind zum Beispiel das Signal einer Drosselklappe, das Signal der Drehzahl der Antriebseinheit, das Signal der Fahrzeuggeschwindigkeit und die Drehzahlsignale der Kegelscheibenpaare. Der Micro-Controller 20 berechnet mittels des Funktionsblockes 22 aus den Eingangsgrößen 23 die Funktionsparameter für das CVT 3. Diese werden mittels des Funktionsblockes Steuerung Stellglieder 21 und über die nicht dargestellten elektromagnetischen Stellglieder, welche sich im hydraulischen Steuergerät 48 des CVT 3 befinden, eingestellt. Funktionsparameter des CVT 3 sind zum Beispiel die Übersetzung und der Anpreßdruck zweite Kegelscheibe zu Umschlingungsorgan 13.

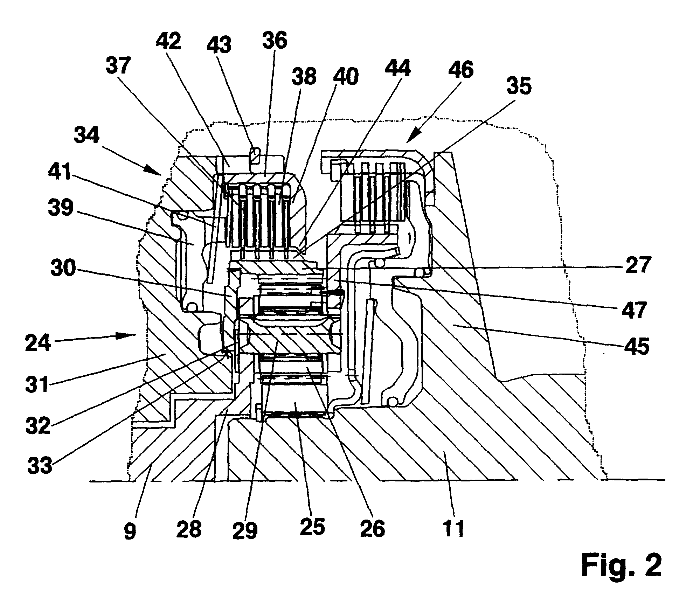

In Fig. 2 ist ein Ausschnitt der Vorwärts-/Rückwärtsfahreinheit 10 aus Fig. 1 dargestellt. Diese besteht im wesentlichen aus einer ersten Welle 9, einer zweiten Welle 11, einem Planetengetriebe 24, einer Bremse 34 und einer Kupplung 46. Eine erste Kegelscheibe 45 ist mit der zweiten Welle 11 einstückig ausgeführt. Das Planetengetriebe 24 setzt sich zusammen aus einem Sonnenrad 25, mehreren Planetenrädern 26 und einem Hohlrad 27. Die Planetenräder 26 sitzen jeweils drehbar auf einem Bolzen 29. Die Planetenräder 26 werden über einen gemeinsamen ersten Planetensteg 28 angetrieben, wobei der erste Planetensteg 28 einstückig mit der ersten Welle 9 ausgeführt ist. Ein zweiter Planetensteg 47 führt auf den Innenlamellenträger der Kupplung 46. Der erste und zweite Planetenträger können einstückig ausgeführt sein. Die beiden Planetenstege können zum Beispiel als Blechumformteil ausgestaltet und über umgeformte Laschen einstükig miteinander verbunden sein.
Das Hohlrad 27 ist mit einem Innenlamellenträger 35 der Bremse 34 verbunden. Die Bremse 34 setzt sich zusammen aus dem Innenlamellenträger 35, den Innenlamellen 37, Außenlamellen 38, Außenlamellenträger 36, Endlamelle 40, Sicherungsring 43, Verzahnung 42, Kolben 39 mit Rückstelleinrichtung 41. Als Rückstelleinrichtung 41 ist eine Tellerfeder dargestellt.
Die Verzahnung des Planetengetriebes 24 ist als Schrägverzahnung ausgeführt. Das Hohlrad 27 ist mit einer Anlaufscheibe 30 einstückig verbunden. Das Hohlrad 27 stützt sich somit über die Anlaufscheibe 30 entweder an einer ortsfesten Wand 31 oder am ersten Planetensteg 28 ab. Im Vorwärtsfahrbereich besteht zwischen Hohlrad 27 und dem ersten Planetensteg 28 kein Drehzahlunterscheid. Lediglich im Rückwärtsfahrbereich mit einem Fahranteil von 0,5 % besteht ein Drehzahlunterschied zwischen diesen beiden Teilen. Wie in Fig. 2 dargestellt, befindet sich zwischen der Anlaufscheibe 30 und dem ersten Planetensteg 28 eine zusätzliche Scheibe 32.
Die Anlaufscheibe 30 stützt sich in radialer Richtung an einer Fläche 33 der ortsfesten Wand 31 ab. Selbstverständlich kommt statt der ortsfesten Wand 31 auch als Abstützung ein drehendes Teil, Welle oder dergleichen, in Betracht. Dadurch wird das Hohlrad 27 zusätzlich zur Lagerung über die Planeten in radialer Richtung fixiert. Die radiale Abstützung der Anlaufscheibe 30 kann ebenfalls mittels einer Lageranordnung, zum Beispiel Kugellager, erfolgen.

Die Kupplung 46 bzw. die Bremse 34 dient der Vorwärts-/Rückwärtsumschaltung. Bei geschlossener Kupplung 46 läuft das Planetengetriebe 24 als Ganzes um. Die Kegelscheibe 45 bzw. die zweite Welle 11 drehen sich somit mit der gleichen Drehzahl und in die gleiche Drehrichtung wie die erste Welle 9. Bei geschlossener Bremse 34 wälzen sich die Planetenräder 26 am feststehenden Hohlrad 27 ab und treiben mit Drehrichtungsumkehr die Sonne 25 an. Sowohl Kupplung 46 als auch Bremse 34 sind in Lamellenbauweise ausgeführt. Die Kupplung 46 zeigt eine Ausführungsform nach dem Stand der Technik, bei der eine Endlamelle über einen Sicherungsring im Außenlamellenträger gegen axiale Verschiebung gesichert ist. Die Bremse 34 zeigt eine erfindungsgemäße Lösung, bei der der Außenlamellenträger 36 und die Endlamelle 40 einstückig ausgeführt sind. Hierdurch wird der Vorteil erzielt, daß die Bremse kürzer ausgeführt werden kann, da der Überstand für den Sicherungsring entfällt. Des weiteren wird ein axiales Durchbiegen der Endlamelle reduziert, wodurch sich der Traganteil der einzelnen Lamelle verbessert.
Die Endlamelle 40 weist einen Bund 44 auf. Dieser Bund hat einen kürzeren Abstand zur Mittelachse der ersten Welle 9 als die Mittelachse des Innenlamellenträgers 35 zur Mittelachse der ersten Welle 9. Dieser Bund verhindert, daß der Innenlamellenträger bei der Montage herausfällt. Der Außenlamellenträger 36 ist über eine Verzahnung 42 mit der ortsfesten Wand 31 verbunden. Darüber angeordnet als axiale Sicherung ist der Sicherungsring 43.

Die beiden erfindungsgemäßen Lösungen lassen sich bei jedem Planetengetriebe und bei jedem Planetengetriebe mit Kupplungs-/Bremsanordnung verwenden.

### Bezugszeichen

- 1: Antriebseinheit
- 2: Antriebswelle
- 3: CVT
- 4: hydrodynamischer Wandler + Wandlerüberbrückungskupplung
- 5: Pumpenrad
- 6: Turbinenrad
- 7: Leitrad
- 8: Pumpe
- 9: erste Welle
- 10: Vorwärts-/Rückwärtsfahreinheit
- 11: zweite Welle
- 12: erstes Kegelscheibenpaar
- 13: Umschlingungsorgan
- 14: zweites Kegelscheibenpaar
- 15: Abtriebswelle
- 16: Zwischenwelle
- 17: Differential
- 18A: Getriebeausgangswelle
- 18B: Getriebeausgangswelle
- 19: elektronisches Steuergerät
- 20: Micro-Controller
- 21: Funktionsblock Steuerung Stellglieder
- 22: Funktionsblock Berechnung
- 23: Eingangsgrößen
- 24: Planetengetriebe
- 25: Sonnenrad
- 26: Planetenräder
- 27: Hohlrad
- 28: erster Planetensteg
- 29: Bolzen
- 30: Anlaufscheibe
- 31: ortsfeste Wand
- 32: Scheibe
- 33: Fläche
- 34: Bremse
- 35: Innenlamellenträger
- 36: Außenlamellenträger
- 37: Innenlamellen
- 38: Außenlamellen
- 39: Kolben
- 40: Endlamelle
- 41: Rückstelleinrichtung
- 42: Verzahnung
- 43: Sicherungsring
- 44: Bund
- 45: erste Kegelscheibe
- 46: Kupplung
- 47: zweiter Planetensteg
- 48: hydraulisches Steuergerät

## Patentansprüche

1. Anordnung bestehend aus einer ersten Welle (9) und einem Planetengetriebe (24), welches mindestens ein Sonnenrad (25), mehrere von einem Planetenräderträger getragene Planetenräder (26) und mindestens ein Hohlrad (27) umfaßt, wobei
- die Planetenräder (26) jeweils drehbar auf einem Bolzen (29) gelagert sind,
- die Bolzen (29) in einem ersten und zweiten Planetensteg (28, 47) sitzen, mit denen sie gemeinsam den Planetenräderträger bilden,
- das Sonnenrad (25), die Planetenräder (26) und das Hohlrad (27) miteinander im Eingriff stehen,
- die erste Welle (9) entweder das Sonnenrad (25) oder den ersten Planetensteg (28) antreibt,
- eine in vertikaler Richtung angeordnete Anlaufscheibe (30) einstückig mit dem Hohlrad (27) verbunden ist,
- der innere Radius der Anlaufscheibe (30) etwa dem Abstand Mittelachse der ersten Welle (9) zu Mittelachse der Bolzen (29) entspricht, und
- sich die Anlaufscheibe (30) in axialer Richtung entweder an einer ortsfesten Wand (31) oder über eine Scheibe (32) am ersten Planetensteg (28) abstützt,
**dadurch gekennzeichnet, daß**
- sich die Anlaufscheibe (30) in radialer Richtung über eine Fläche (33) an der ortsfesten Wand (31) bzw. an der ersten Welle abstützt.

2. Anordnung nach Anspruch 1, **dadurch gekennzeichnet, daß** sich die Anlaufscheibe (30) in radialer Richtung über eine Lageranordnung an der ortsfesten Wand (31) bzw. der ersten Welle abstützt, wobei sich die Lageranordnung zwischen der Fläche (33) am inneren Durchmesser der Anlaufscheibe (30) und der ortsfesten Wand (31) bzw. der ersten Welle befindet.

3. Anordnung bestehend aus einer ersten Welle (9) und einem Planetengetriebe (24), welches mindestens ein Sonnenrad (25), mehrere von einem Planetenräderträger getragene Planetenräder (26) und mindestens ein Hohlrad (27) umfaßt, wobei
- die Planetenräder (26) jeweils drehbar auf einem Bolzen (29) gelagert sind,
- die Bolzen (29) in einem ersten und zweiten Planetensteg (28, 47) sitzen, mit denen sie gemeinsam den Planetenräderträger bilden,
- das Sonnenrad (25), die Planetenräder (26) und das Hohlrad (27) miteinander im Eingriff stehen,
- die erste Welle (9) entweder das Sonnenrad (25) oder den ersten Planetensteg (28) antreibt,
- das Hohlrad (27) oder die Bolzen (29) mit einem Innenlamellenträger (35) einer Kupplung (46) oder Bremse (34) der Lamellenbauart drehfest verbunden sind,
- die Kupplung (46) oder Bremse (34) aus dem Innenlamellenträger (35) und einem Außenlamellenträger (35, 36) besteht,
- dem Innenlamellenträger (35) Innenlamellen (37) und dem Außenlameilenträger (36) Außenlamellen (38) zugeordnet sind,
- die Innenlamellen (37) und die Außenlamellen (38) in axialer Richtung verschiebbar und mit dem Innen- bzw. Außenlamellenträger (35, 36) drehfest verbunden sind,
- die Kupplung (46) oder Bremse (34) dadurch geschlossen wird, daß ein Kolben (39) die Außen- und Innenlamellen (37, 38) gegen eine Endlamelle (40) drückt, welche eine Außenlamelle (38) ist,
- die Kupplung (46) oder Bremse (34) dadurch geöffnet wird, daß der Kolben (39) durch eine Rückstelleinrichtung (41) in seine Ruheposition zurückgeschoben wird, und
- der Außenlamellenträger (36) und die Endlamelle (40) einstückig ausgeführt sind,
**dadurch gekennzeichnet, daß**
- der Außenlamellenträger (36) am äußeren Umfang eine Verzahnung (42) aufweist,
- der Außenlamellenträger (36) über die Verzahnung (42) in radialer und über einen Sicherungsring (43) in axialer Richtung fixiert ist, und
- die Endlamelle (40) radial in Richtung der ersten Welle (9) einen Bund (44) aufweist, der einen kürzeren Abstand zur ersten Welle (9) hat als die Mittelachse des Innenlamellenträgers (35) zur Mittelachse der ersten Welle (9).

4. Anordnung nach Anspruch 3, **dadurch gekennzeichnet, daß** der erste und der zweite Planetensteg (28, 47) als Blechumformteil ausgestaltet und über umgeformte Laschen einstückig miteinander verbunden sind.

## Claims

1. Arrangement consisting of a first shaft (9) and a planetary gear (24), which comprises at least one sun wheel (25), a plurality of planet wheels (25) carried by a planet carrier and at least one ring gear (27), wherein
- the planet wheels (26) are supported in each case rotatably on a pin (29),
- the pins (29) are seated in a first and second planet web (28, 47), with which they jointly form the planet carrier,
- the sun wheel (25), the planet wheels (26) and the ring gear (27) are meshed with one another,
- the first shaft (9) drives either the sun wheel (25) or the first planet web (28),
- a stop disk (30) disposed in vertical direction is integrally connected to the ring gear (27),
- the inner radius of the stop disk (30) corresponds approximately to the distance between the centre line of the first shaft (9) and the centre line of the pins (9), and
- the stop disk (30) is supported in axial direction either against a stationary wall (31) or via a disk (32) against the first planet web (28),
**characterized in that**
- the stop disk (30) is supported in radial direction via a surface (33) against the stationary wall (31) or against the first shaft.

2. Arrangement according to claim 1, **characterized in that** the stop disk (30) is supported in radial direction via a bearing arrangement against the stationary wall (31) and/or the first shaft, wherein the bearing arrangement is situated between the surface (33) on the inner diameter of the stop disk (30) and the stationary wall (31) or the first shaft.

3. Arrangement consisting of a first shaft (9) and a planetary gear (24), which comprises at least one sun wheel (25), a plurality of planet wheels (25) carried by a planet carrier and at least one ring gear (27), wherein
- the planet wheels (26) are supported in each case rotatably on a pin (29),
- the pins (29) are seated in a first and second planet web (28, 47), with which they jointly form the planet carrier,
- the sun wheel (25), the planet wheels (26) and the ring gear (27) are meshed with one another,
- the first shaft (9) drives either the sun wheel (25) or the first planet web (28),
- the ring gear (27) or the pins (29) are non-rotatably connected to an inner disc carrier (35) of a multiple-disc clutch (46) or brake (34),
- the clutch (46) or brake (34) comprises an inner disc carrier (35) and an outer disc carrier (35, 36),
- inner discs (37) are associated with the inner disc carrier (35) and outer discs (38) are associated with the outer disc carrier (36),
- the inner discs (37) and the outer discs (38) are displaceable in axial direction and are non-rotatably connected to the inner and outer disc carrier (35, 36) respectively,
- the clutch (46) or brake (34) is closed in that a piston (39) presses the outer and inner discs (37, 38) against an end disc (40), which is an outer disc (38),
- the clutch (46) or brake (34) is opened in that the piston (39) is pushed back into its neutral position by a resetting device (41), and
- the outer disc carrier (36) and the end disc (40) are of an integral construction,
**characterized in that**
- the outer disc carrier (36) at the outer periphery has a gearing (42),
- the outer disc carrier (36) is fixed via the gearing (42) in radial direction and via a locking ring (43) in axial direction, and
- the end disc (40) radially in the direction of the first shaft (9) has a collar (44), which is a shorter distance away from the first shaft (9) than the centre line of the inner disc carrier (35) is from the centre line of the first shaft (9).

4. Arrangement according to claim 3, **characterized in that** the first and the second planet web (28, 47) take the form of a shaped sheet-metal part and are integrally connected to one another by shaped lugs.

## Revendications

1. Ensemble composé d'un premier arbre (9) et d'un engrenage planétaire (24) comprenant au moins une roue solaire (25), plusieurs roues planétaires (26) supportées par un porte-pignons satellites et au moins une roue à denture intérieure (27), dans lequel
- les roues planétaires (26) sont montées chacune de façon pivotante sur un axe (29),
- les axes (29) sont logés dans un premier et un deuxième porte-satellites (28, 47) avec lesquels ils forment ensemble le porte-pignons satellites,
- la roue solaire (25), les roues planétaires (26) et la roue à denture intérieure (27) s'engrènent,
- le premier arbre (9) entraîne soit la roue solaire (25), soit le premier porte-satellites (28),
- un disque de démarrage (30) disposé dans le sens vertical est relié sous forme de monobloc à la roue à denture intérieure (27),
- le rayon intérieur du disque de démarrage (30) correspond approximativement à la distance entre la ligne centrale du premier arbre (9) et la ligne centrale des axes (29), et
- le disque de démarrage (30) s'appuie dans le sens axial soit à une paroi fixe (31) soit par l'intermédiaire d'un disque (32) sur le premier porte-satellites (28),
**caractérisé en ce que**
- le disque de démarrage (30) s'appuie dans le sens radial par l'intermédiaire d'une surface (33) sur la paroi fixe (31), respectivement sur le premier arbre.

2. Ensemble selon la revendication 1, **caractérisé en ce que** le disque de démarrage (30) s'appuie dans le sens radial par l'intermédiaire d'un ensemble de paliers sur la paroi fixe (31), respectivement sur le premier arbre, en ce que l'ensemble de paliers se trouve entre la surface (33) sur le diamètre intérieur du disque de démarrage (30) et la paroi fixe (31), respectivement le premier arbre.

3. Ensemble composé d'un premier arbre (9) et d'un engrenage planétaire (24) comprenant au moins une roue solaire (25), plusieurs roues planétaires (26) supportées par un porte-pignons satellites et au moins une roue à denture intérieure (27), dans lequel
- les roues planétaires (26) sont montées chacune de façon pivotante sur un axe (29),
- les axes (29) sont logés dans un premier et un deuxième porte-satellites (28, 47) avec lesquels ils forment ensemble le porte-pignons satellites,
- la roue solaire (25), les roues planétaires (26) et la roue à denture intérieure (27) s'engrènent,
- le premier arbre (9) entraîne soit la roue solaire (25), soit le premier porte-satellites (28),
- la roue à denture intérieure (27) ou les axes (29) sont reliés de façon non rotative à un support de disques intérieurs (35) d'un embrayage (46) ou d'un frein (34) ayant une construction du type à disques,
- l'embrayage (46) ou le frein (34) se compose du support de disques intérieurs (35) et d'un support de disques extérieurs (35, 36),
- au support de disques intérieurs (35) sont associés des disques intérieurs (37) et au support de disques extérieurs (36) sont associés des disques extérieurs (38),
- les disques intérieurs (37) et les disques extérieurs (38) sont mobiles dans le sens axial et sont reliés de façon non rotative au support des disques intérieurs, respectivement extérieurs (35, 36),
- l'embrayage (46) ou le frein (34) est fermé par le fait qu'un piston (39) pousse les disques extérieurs et intérieurs (37, 38) contre un disque terminal (40), qui est un disque extérieur (38),
- l'embrayage (46) ou le frein (34) est ouvert par le fait que le piston (39) est repoussé dans sa position de repos par l'intermédiaire d'un dispositif de rappel (41), et
- le support des disques extérieurs (36) et le disque terminal (40) sont réalisés en un seul bloc,
**caractérisé en ce que**
- le support de disques extérieurs (36) présente une denture (42) à sa circonférence extérieure,
- le support de disques extérieurs (36) est fixé par l'intermédiaire de la denture (42) dans le sens radial et par l'intermédiaire d'un anneau d'arrêt (43) dans le sens axial, et
- le disque terminal (40) présente dans le sens radial en direction du premier arbre (9), un épaulement (44) qui a une distance vers le premier arbre (9) plus courte que la ligne centrale du support des disques intérieurs (35) vers la ligne centrale du premier arbre (9).

4. Ensemble selon la revendication 3, **caractérisé en ce que** le premier et le deuxième porte-satellites (28, 47) sont réalisés comme pièces formées en tôle et sont reliés entre eux en un seul bloc par des colliers réalisés par formage.
